# EUROPEAN PATENT APPLICATION

(11) **EP 2 871 513 A1**
(43) Date of publication of application: **13.05.2015**
(21) Application number: 14190076.1
(22) Date of filing: 23.10.2014
(51) Int. Cl.: G02B 21/36

(54) **Microscope system**

(30) Priority: 12.11.2013 JP 2013234148
(71) Applicant: Olympus Corporation, Tokyo 151-0072 (JP)
(72) Inventor: Kobayashi, Mina, Tokyo, 151-0072 (JP); Ikeno, Yasunori, Tokyo, 151-0072 (JP); Tanaka, Toshihiko, Tokyo, 151-0072 (JP)
(74) Representative: Schicker, Silvia

(57) **Abstract**

Microscope images are easily browsed even with a terminal, such as a tablet terminal, whose transmission speed is low. Provided is a microscope system (1) that includes: a microscope (2) that acquires a plurality of microscope images of a specimen; a system main unit (3) provided with a storage section that sequentially stores the microscope images acquired by the microscope (2); and a terminal (5) that is connected to the system main unit (3) via a network (4), in which the system main unit (3) delivers the microscope images stored in the storage section, via the network (4), in response to a request from the terminal (5); and the terminal (5) sequentially displays the microscope images delivered from the system main unit (3).

## Description

### {Technical Field}

The present invention relates to a microscope system.

### {Background Art}

Conventionally, time-lapse observation in which images of a specimen are acquired by a microscope for a long time, and the images are acquired in association with the acquisition times, thereby making it possible to observe the state of the specimen ex-post facto while following the course of time, has been performed. In this case, the images acquired by the microscope are stored in a personal computer connected to the microscope, and an image that has already been acquired during time-lapse observation or an image acquired after time-lapse observation is browsed with the personal computer, as needed (for example, see PTL 1).

### {Citation List}

### {Patent Literature}

{PTL 1} Publication of Japanese Patent No. 4996312

### {Summary of Invention}

### {Technical Problem}

In a microscope system disclosed in PTL 1, because images are stored and displayed by the personal computer connected to the microscope, the images can be browsed even when there is a large amount of acquired image data, as in time-lapse observation. However, it is difficult to browse the images by using a terminal, such as a tablet terminal, whose transmission speed is low and that requires a long time to store large amounts of image data.

The present invention has been made in view of the above-described circumstances, and an object thereof is to provide a microscope system capable of easily browsing microscope images even by using a terminal, such as a tablet terminal, whose transmission speed is low.

### {Solution to Problem}

In order to achieve the above-described object, the present invention provides the following solutions.

According to one aspect, the present invention provides a microscope system including: a microscope that acquires a plurality of microscope images of a specimen; a system main unit provided with a storage section that sequentially stores the microscope images acquired by the microscope; and a terminal that is connected to the system main unit via a network, in which the system main unit delivers the microscope images stored in the storage section, via the network, in response to a request from the terminal; and the terminal sequentially displays the microscope images delivered from the system main unit.

According to this aspect, the microscope images acquired by the microscope are sequentially stored in the storage section of the system main unit. When there is a delivery request from the terminal via the network, the microscope images stored in the storage section are delivered to the terminal via the network, and the delivered microscope images are sequentially displayed on the terminal. In the terminal, it is possible to browse the microscope images without storing the microscope images having large amounts of data and to rapidly start browsing of the microscope images after the request from the terminal even when the transmission speed of the network is not high.

In the above-described aspect, the system main unit may include an image-format converting section that converts the microscope images requested from the terminal into a format to be browsed in the terminal.

By doing so, the microscope images are converted into a browsing format suitable for the terminal by the image-format converting section and are then delivered; therefore, it is not necessary to perform browsing-format conversion processing in the terminal, and browsing can be performed therein immediately after delivery.

In the above-described aspect, the microscope may acquire a plurality of microscope images having information of four dimensions or more.

In the above-described aspect, the information of four dimensions or more of the microscope images may be selected from positional information in X and Y-directions intersecting an optical axis of the microscope, positional information in a Z-direction along the optical axis of the microscope, time information, wavelength information, brightness information, positional information on a line intersecting the optical axis of the microscope, channel information if there are a plurality of detecting sections, and positional information of an area crossing the optical axis of the microscope.

By doing so, microscope images having information of any two dimensions of the four dimensions can be browsed by switching the information to information of the remaining two dimensions.

For example, microscope images having positional information of two dimensions of the X and Y directions are browsed along the time axis, thereby making it possible to observe a chronological change of the specimen, and the same microscope images are browsed along the positional information of the Z direction, thereby making it possible to observe a change in the depth direction of the specimen.

In the above-described aspect, the system main unit may include an image composing section that composes, if there are a plurality of microscope images in the same dimension, these microscope images.

By doing so, a plurality of microscope images having the same dimension are composed by the image composing section and then delivered; therefore, it is not necessary to perform composition processing in the terminal, and browsing can be performed therein immediately after delivery.

In the above-described aspect, the terminal may send a browsing speed to the system main unit; and the system main unit may thin out microscope images to be delivered, according to the browsing speed sent from the terminal.

By doing so, when the browsing speed in the terminal is high, instead of delivering all of the microscope images, a small number of microscope images obtained after thinning out the microscope images are delivered, thereby allowing smooth browsing.

In the above-described aspect, the terminal may send a display magnification to the system main unit; and the system main unit may generate microscope images whose magnifications differ in a stepwise manner, store the microscope images in the storage section, and deliver a microscope image having a magnification corresponding to the display magnification sent from the terminal.

By doing so, a microscope image having the magnification corresponding to a display magnification required in the terminal is delivered from the system main unit to the terminal; therefore, the number of processing steps of converting the magnification in the terminal is minimized, and thus browsing can be started immediately after delivery.

### {Advantageous Effects of Invention}

According to the present invention, an advantageous effect is afforded in that microscope images can be easily browsed even with a terminal, such as a tablet terminal, whose transmission speed is low.

### {Brief Description of Drawings}

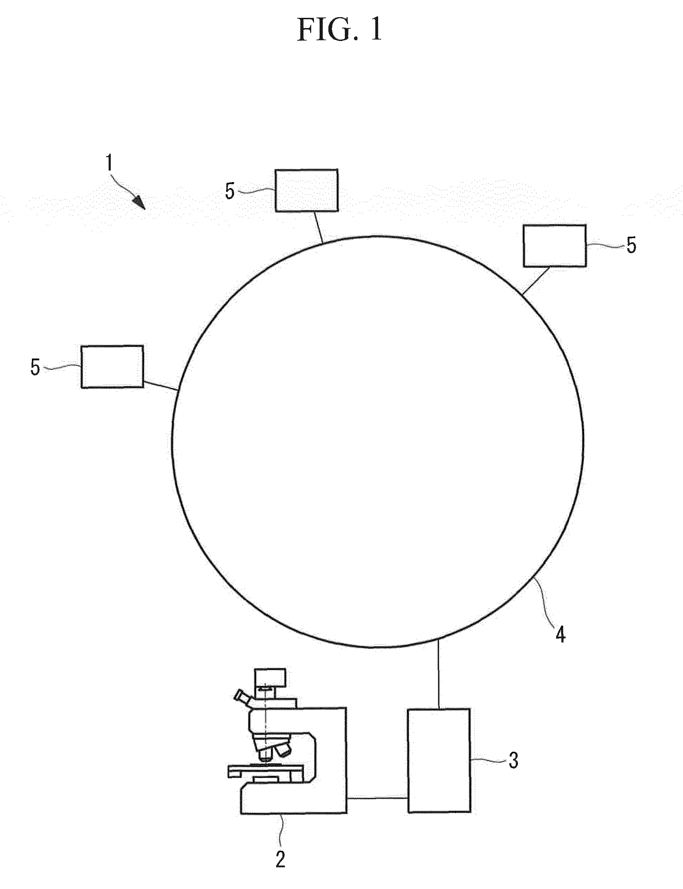

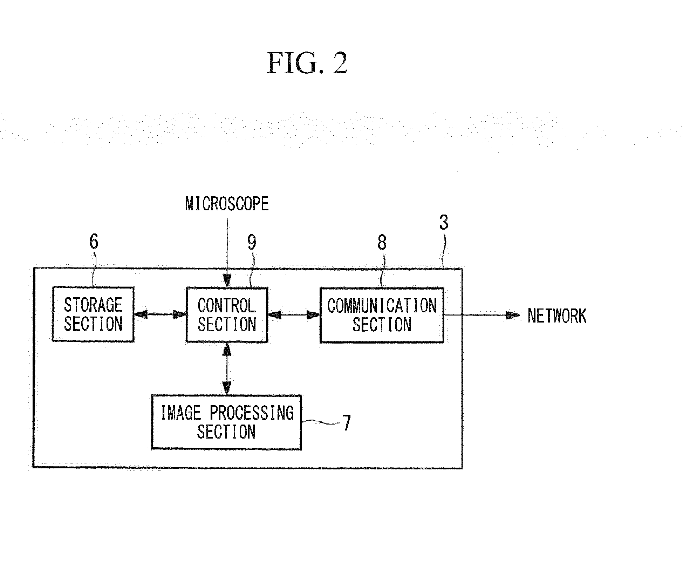

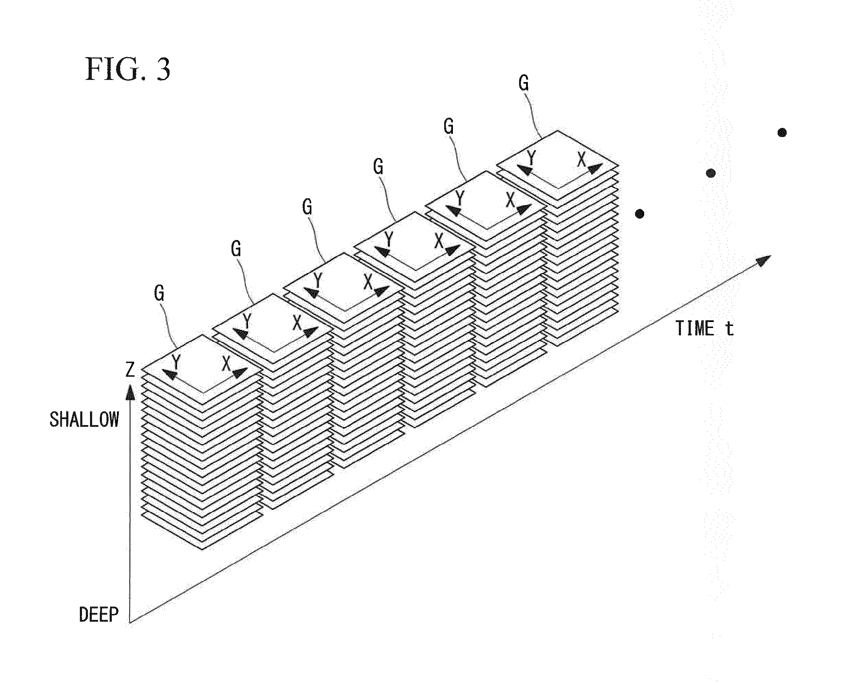

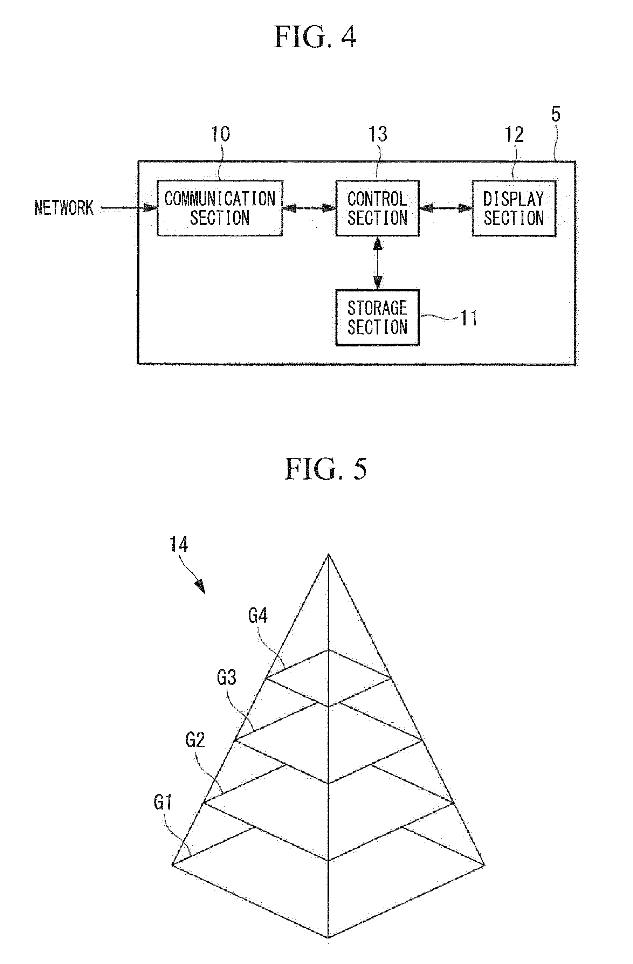

{Fig. 1} Fig. 1 is a view showing the overall configuration of a microscope system according to one embodiment of the present invention.
{Fig. 2} Fig. 2 is a block diagram showing a server provided in the microscope system shown in Fig. 1.
{Fig. 3} Fig. 3 is a view showing example image data stored in a storage section of the server shown in Fig. 2.
{Fig. 4} Fig. 4 is a block diagram showing a terminal provided in the microscope system shown in Fig. 1.
{Fig. 5} Fig. 5 is a view showing an example image pyramid generated in an image processing section shown in Fig. 1.

### {Description of Embodiment}

A microscope system 1 according to one embodiment of the present invention will be described below with reference to the drawings.

As shown in Fig. 1, the microscope system 1 of this embodiment includes a microscope 2 that acquires a microscope image of a specimen, a server (system main unit) 3 that is connected to the microscope 2, and terminals 5 that are connected to the server 3 via a wireless or wired network 4.

The microscope 2 is a fluorescence microscope, such as a scanning confocal microscope or a multiphoton-excitation microscope, in which the focal position of an objective optical system is located at predetermined depth points in the specimen and in which laser light is scanned in two-dimensional directions perpendicular to the optical axis, thereby acquiring a fluorescence image.

The microscope 2 locates the focal position of the objective optical system at a plurality of different optical-axis-wise (Z-wise) points of a region-of-interest set in the specimen and acquires a fluorescence image at each of the Z-wise points. Furthermore, the microscope 2 acquires, at each of the Z-wise points, a plurality of fluorescence images in chronological order at time intervals.

Then, the microscope 2 consecutively sends acquired microscope images to the server 3.

As shown in Fig. 2, the server 3 includes a storage section 6 that stores the microscope images sent from the microscope 2, an image processing section (image-format converting section) 7 that performs processing on the microscope images in response to a request from the terminal 5, a communication section 8 that receives a signal from the terminal 5 and also sends the microscope images that have been subjected to image processing in the image processing section 7 to the terminal 5, and a control section 9 that controls these sections 6, 7, and 8.

The storage section 6 is controlled by the control section 9 and stores, as shown in Fig. 3, microscope images G that have been consecutively sent from the microscope 2, in association with Z-wise points and acquisition times.

The image processing section 7 is controlled by the control section 9, reads from the storage section 6 microscope images G that are requested from the terminal 5, and performs processing on the read microscope images G. The processing is, for example, processing for creating a time-lapse image, a Z-stack image, or the like, and, processing for converting the microscope images G into a form suitable for delivery, for example, processing for dividing a microscope image G into parts.

The division of the microscope image G is processing for dividing a microscope image G whose size exceeds a certain size into parts having sizes suitable for delivery and storing the parts. For example, a single microscope image G having 512 × 512 pixels or larger is divided into parts each having 256 × 256 pixels. Instead of the microscope image G being divided, the microscope image G may be compressed at a compression rate set in advance corresponding to the size thereof, thereby being compressed to an automatically-set size.

The communication section 8 is controlled by the control section 9, inputs a signal sent from the terminal 5 into the control section 9, and sends microscope images G that are requested from the terminal 5 and are then subjected to image processing in the image processing section 7, to the terminal 5 via the network 4.

Every time a microscope image G is sent from the microscope 2, the control section 9 stores the sent microscope image G in the storage section 6.

Furthermore, when observation of a particular microscope image G is specified, and an acquisition time and a Z-wise point are specified in the terminal 5, the control section 9 searches the storage section 6 of the server 3, reads the microscope image G associated with the acquisition time and Z-wise point, and delivers it to the communication section 8.

Furthermore, when time-lapse observation is specified, and an acquisition time from which observation is started and a Z-wise point are specified in the terminal 5, the control section 9 searches the storage section 6 of the server 3, sequentially reads a plurality of microscope images G arranged in chronological order, starting from the microscope image G associated with the acquisition time and Z-wise point, and delivers them to the communication section 8.

Furthermore, when observation of a Z-stack image is specified, and an acquisition time and a Z-wise point at which observation is started are specified in the terminal 5, the control section 9 searches the storage section 6 of the server 3, sequentially reads a plurality of microscope images G arranged in the Z-direction, starting from the microscope image G associated with the acquisition time and Z-wise point, causes the image processing section 7 to perform image processing thereon, and causes the communication section 8 to send them to the terminal 5.

As shown in Fig. 4, the terminal 5 includes a communication section 10 that communicates with the server 3 via the network 4, a storage section 11 that stores microscope images G sent from the server 3, a display section 12 that displays the microscope images G and inputs a request to the server 3 through a GUI (graphical user interface), and a control section 13 that controls the display section 12 so as to sequentially display the microscope images G stored in the storage section 11.

The advantageous effects of the thus-configured microscope system 1 of this embodiment will be described below.

A description will be given of a case in which, by using the microscope system 1 of this embodiment, the microscope images G are observed with the terminal 5 at a remote location away from the microscope 2.

Through operation of the microscope 2, a plurality of Z-stack images, each composed of a plurality of microscope images G whose focal positions with respect to the specimen are made different in the Z-direction, are acquired at different acquisition times. The acquired microscope images G are sent to the server 3 and are stored in the storage section 6 in association with the Z-wise points and the acquisition times by the control section 9.

In this case, when the terminal 5 is manipulated at the remote location to select time-lapse observation and to input the acquisition time from which observation is to be started and the Z-wise point at which observation is to be performed, such information is sent to the server 3 via the network 4. In the server 3, the control section 9 searches the storage section 6, reads a first microscope image G, causes the image processing section 7 to perform image processing thereon, and then causes the communication section 8 to send it to the terminal 5 via the network 4. The control section 9 reads, from the storage section 6, a next microscope image G that is adjacently located before or after the first-read microscope image G in chronological order and causes the communication section 8 to send the next microscope image G to the terminal 5 via the network 4. Thereafter, similar processing is repeated.

When a microscope image G is sent to the terminal 5, the microscope image G is first stored in the storage section 11 and is then displayed on the display section 12. In the terminal 5, without waiting for all requested microscope images G to be sent, every time a single microscope image G is sent, the microscope image G is then displayed on the display section 12.

Here, the control section 9 may have a so-called prereading function in which, when the terminal 5 is manipulated at the remote location to request a microscope image G, microscope images G that follow the microscope image G that is requested (hereinafter, referred to as requested microscope image G) are pre-read.

In this case, the control section 9 reads, from the storage section 6, the requested microscope image G and the following microscope images G and causes the communication section 8 to send them to the terminal 5 via the network 4. Then, the requested microscope image G and the following microscope images G are stored together in the storage section 11, and, after the requested microscope image G is displayed on the display section 12, the following microscope images G are displayed on the display section 12 at displayable timing.

Therefore, even in the terminal 5 at the remote location, which can be connected to the microscope 2 only via the network 4 and thus takes an immense amount of time to send large amounts of image data, an advantage is afforded in that time-lapse observation using the microscope images G that have already been acquired can be easily performed while a time-lapse image is being acquired in the microscope 2.

Furthermore, when the terminal 5 is manipulated at the remote location to select observation of a Z-stack image and to input a Z-wise point at which observation is to be started, such information is sent to the server 3 via the network 4. In the server 3, the control section 9 searches the storage section 6, reads a first microscope image G, causes the image processing section 7 to perform image processing thereon, and then causes the communication section 8 to send the first microscope image G to the terminal 5 via the network 4. The control section 9 reads, from the storage section 6, a next microscope image G that is adjacent to the first-read microscope image G in the Z-direction and causes the communication section 8 to send the next microscope image G to the terminal 5 via the network 4. Thereafter, similar processing is repeated.

When a microscope image G is sent to the terminal 5, the microscope image G is first stored in the storage section 11 and is then displayed on the display section 12. In the terminal 5, without waiting for all requested microscope images G to be sent, every time a single microscope image G is sent, the microscope image G is then displayed on the display section 12.

Here, the control section 9 may have a so-called prereading function, in which, when the terminal 5 is manipulated at the remote location to request a microscope image G, microscope images G that follow this requested microscope image G are pre-read.

In this case, the control section 9 reads, from the storage section 6, the requested microscope image G and the following microscope images G and causes the communication section 8 to send them to the terminal 5 via the network 4. Then, the requested microscope image G and the following microscope images G are stored together in the storage section 11, and, after the requested microscope image G is displayed on the display section 12, the following microscope images G are displayed on the display section 12 at displayable timing.

Thus, even in the terminal 5 at the remote location, which can be connected to the microscope 2 only via the network 4 and thus takes an immense amount of time to send large amounts of image data, an advantage is afforded in that observation using the microscope images G that have already been acquired can be easily performed while a Z-stack image is being acquired in the microscope 2.

Specifically, according to this embodiment, even with the terminal 5, such as a tablet terminal, whose transmission speed is low, it is possible to easily browse a microscope image that is currently being acquired or a microscope image that has already been acquired.

Furthermore, according to the microscope system 1 of this embodiment, microscope images G each have information of four dimensions, including two-dimensional directions (X and Y) perpendicular to the optical axis, a one-dimensional direction (Z) along the optical axis, and a time-axis direction (T), and are acquired at intervals in the Z-direction and the T-direction, thus having enormous amounts of image data. However, image data is not directly delivered from the microscope 2; instead, image data stored in the storage section 6 provided in the server 3 is delivered. Therefore, the action of the microscope 2 is not affected by processing for delivery, and microscope images G can be acquired with accuracy.

Furthermore, even when time-lapse images or Z-stack images composed of a number of microscope images G stored in the storage section 6 of the server 3 are requested from the terminal 5, every time any of the microscope images G is sent to the terminal 5, the microscope image G is then displayed on the display section 12. Thus, even in the terminal 5 at the remote location, to which the microscope images G are sent via the network 4 whose transmission speed is low, an advantage is afforded in that the time-lapse images or the Z-stack images can be sequentially browsed without waiting for a long time.

Note that, in this embodiment, a description has been given of a case in which time-lapse images and Z-stack images are simply browsed in the terminal 5 at the remote location; however, instead of this, for example, a description will be given of a case in which a time-lapse image is to be enlarged while being browsed. If such a request can be predicted, it suffices that the image processing section 7 of the server 3 generates an image pyramid 14 in advance, as shown in Fig. 5.

Specifically, the image processing section 7 creates the image pyramid 14, which is a collection of a plurality of microscope images G1, G2, G3, G4, and so on, each having a different resolution (magnification). The control section 9 selects, from the image pyramid 14, the microscope image G1, G2, G3, G4 or the like that has the resolution corresponding to the magnifying power (display magnification) requested from the terminal 5 and causes the communication section 8 to send it to the terminal 5. Thus, observation can be performed at a similar resolution even when the magnifying power is changed, without increasing the number of processing steps in the terminal 5.

Furthermore, for example, when microscope images G are acquired by multiple channels having different wavelengths, and browsing of a composite image that is composed of those microscope images G is requested from the terminal 5, it suffices that composition processing is performed in the image processing section 7, and the composite image is sent from the communication section 8 to the terminal 5. Thus, the composite image can be browsed, without increasing the number of processing steps in the terminal 5. In this case, the microscope system may be configured such that the terminal 5 can switch to browse the microscope images G before composition.

Furthermore, in this embodiment, a microscope image G is sent in response to a request from the terminal 5; however, instead of this, every time a microscope image G is acquired, the microscope image G may be automatically stored in the storage section 6 of the server 3, and the communication section 8 may then send the microscope image G stored in the storage section 6 to the terminal 5 via the network 4.

Furthermore, when the playback speed (browsing speed) for a time-lapse image is specified in the terminal 5, instead of sending all the microscope images G adjacent to each other in the time-axis direction, the server 3 may send microscope images G while thinning out the microscope images G according to the playback speed. Thus, because the time required for transmission is saved, the time-lapse image can be smoothly browsed at the specified playback speed.

Furthermore, in this embodiment, the microscope images G each have information of four dimensions, including two-dimensional directions (X and Y) perpendicular to the optical axis, the one-dimensional direction (Z) along the optical axis, and the time-axis direction (T); however, the information is not limited to this, and information of four-dimensions or more of a microscope image may be selected from positional information in X, Y, and Z-directions, time information (T), wavelength information (A), brightness information, positional information on a line intersecting the optical axis of the microscope, channel information if there are a plurality of detecting sections, and positional information of an area crossing the optical axis of the microscope.

Furthermore, if there are a plurality of microscope images in the same dimension, the image processing section 7 may have a function for composing these microscope images.

### {Reference Signs List}

- 1: microscope system
- 2: microscope
- 3: server (system main unit)
- 4: network
- 5: terminal
- 6: storage section
- 7: image processing section (image-format converting section, image composing section)
- G: microscope image

## Claims

1. A microscope system comprising:
a microscope that acquires a plurality of microscope images of a specimen;
a system main unit provided with a storage section that sequentially stores the microscope images acquired by the microscope; and
a terminal that is connected to the system main unit via a network,
wherein the system main unit delivers the microscope images stored in the storage section, via the network, in response to a request from the terminal; and
the terminal sequentially displays the microscope images delivered from the system main unit.

2. The microscope system according to claim 1, wherein the system main unit comprises an image-format converting section that converts the microscope images requested from the terminal into a format to be browsed in the terminal.

3. The microscope system according to claim 1 or 2, wherein the microscope acquires the plurality of microscope images having information of four dimensions or more.

4. The microscope system according to claim 3, wherein the information of four dimensions or more of the microscope images is selected from positional information in X and Y-directions intersecting an optical axis of the microscope, positional information in a Z-direction along the optical axis of the microscope, time information, wavelength information, brightness information, positional information on a line intersecting the optical axis of the microscope, channel information if there are a plurality of detecting sections, and positional information of an area crossing the optical axis of the microscope.

5. The microscope system according to claim 3 or 4, wherein the system main unit comprises an image composing section that composes, if there are a plurality of microscope images in the same dimension, these microscope images.

6. The microscope system according to one of claims 1 to 5,
wherein the terminal sends a browsing speed to the system main unit; and
the system main unit thins out microscope images to be delivered, according to the browsing speed sent from the terminal.

7. The microscope system according to one of claims 1 to 6,
wherein the terminal sends a display magnification to the system main unit; and
the system main unit generates microscope images whose magnifications differ in a stepwise manner, stores the microscope images in the storage section, and delivers a microscope image having a magnification corresponding to the display magnification sent from the terminal.
